# EUROPEAN PATENT APPLICATION

(11) **EP 1 672 940 A1**
(43) Date of publication of application: **21.06.2006**
(21) Application number: 04106748.9
(22) Date of filing: 20.12.2004
(51) Int. Cl.: H04Q 7/32, H04M 1/725

(54) **System and method for sharing media data**

(71) Applicant: Sony Ericsson Mobile Communications AB, 221 88 Lund (SE)
(72) Inventor: Angelhag , Anders, 227 38, Lund (SE); Hultberg, Magnus, 234 32 Lomma (SE)
(74) Representative: Lindberg, Olle Nils Olof

(57) **Abstract**

System and method for sharing media, the method comprising the steps of: establishing a connection (106) between a first radio communication terminal (101) and a media presentation device (102); receiving a wireless signal (109), including media data, in the first radio communication terminal from a second radio communication terminal (108); rendering the media data in the first radio communication terminal to obtain a media signal; automatically pushing the media signal from the first radio communication terminal to the media presentation device; and presenting the media represented by the media signal by means of said media presentation device (103,104).

## Description

### Field of the invention

The present invention relates to the field of media shared between users, using radio communication and a media presentation device. In particular, the present invention relates to using one radio communication terminal connected to a media presentation device as a means for sharing media residing in other radio communication terminals.

### Background

During the last decades, the mobile phone industry has had an enormous development both regarding quality of service and transmission capabilities, as well as the technology for producing advanced communications terminals. A lot of effort has been made in making smaller terminals, with much help from the miniaturisation of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. Still today, mobile phones are getting smaller and smaller and the size is generally considered to be an important factor for the end customer. The development in electronics has made it possible to miniaturise the components of the terminals, at the same time making the terminals capable of performing more advanced functions and services.

The introduction of new transmission schemes, the so-called 3^{rd} generation mobile system presently operative and the 4^{th} generation to be expected in maybe ten years, also provides the possibility to convey more advanced data to the wireless communication terminals, such as digital music files in e.g. the mp3 format, and real time video. Still, a compact format for the terminal means that the memory space in the communication terminal will be limited, as will the processor power usable for processing e.g. media data. Furthermore, the sound quality of a small speaker will never be the same as for a larger speaker of e.g. a stereo set, neither will the experience of viewing a compact display be the same as watching e.g. a television screen. So, even if it will be possible to access a wider range of different kinds of data, the terminal may be a limiting factor.

In this context, it is therefore desirable to be able to transmit media data from mobile radio terminals to more advanced media players, and to have the media data rendered therein. However, the systems available today are not very convenient for sharing media between users and their radio terminals. For the example of audio, in particular music, one way of sharing this media with fellow users is to render it in the radio terminal, and thereby to play it in a handsfree speaker of the terminal. The sound quality of such a speaker will be limited, though. Another way is to connect the radio terminal directly to portable speakers or to a stereo set, for playing the media. If another user wants to play music or other audio, the connection to the speakers or stereo set must however be changed the terminal of that user. Yet another way is to transfer media data as stored on a memory stick, which is moved from one terminal to the terminal being connected to auxiliary speakers or a stereo set, for rendering the media through the connected terminal or in the connected stereo set. Still, this alternative requires physical interaction whenever a different source of media data is to be used.

Another alternative is to make use of a Bluetooth adapter, which is plugged into a data input of a media presentation unit, such as e.g. a stereo set or a television set. Audio and video can thereby be transferred to the media presentation unit via radio for subsequent presentation or storage, from any communication device capable of Bluetooth communication. However, such a solution obviously requires possession to such an adapter.

### Summary of the invention

A general object of the invention is therefore to provide means for improved capabilities for sharing media between users, having such media stored as media data in radio communication terminals. More particularly, it is an object to provide a method and a system for allowing users to have media played or presented to each other, without requiring extensive manoeuvring.

According to a first aspect, this object is fulfilled by a method for sharing media, comprising the steps of:
- establishing a connection between a mobile first radio communication terminal and a media presentation device;
- receiving a wireless signal, including media data, in the first radio communication terminal from a second radio communication terminal;
- rendering the media data in the first radio communication terminal to obtain a media signal;
- automatically pushing the media signal from the first radio communication terminal to the media presentation device; and
- presenting the media represented by the media signal by means of said media presentation device.

In one embodiment, the step of pushing the media signal comprises the steps of:
- detecting whether a connection is established between the first radio communication terminal and the media presentation device; and
- automatically pushing the media signal only if detection indicates that such a connection is established.

In one embodiment, the step of establishing a connection comprises the step of:
- connecting a cable between a data output of the first radio communication terminal and a data input of the media presentation device.

In one embodiment, the step of receiving a wireless signal comprises the step of:
- extracting the received media data from the wireless signal.

In one embodiment, the method comprises the step of:
- establishing a wireless connection between the first radio communication terminal and the second radio communication terminal, prior to the step of transmitting the wireless signal from the second radio terminal.

In one embodiment, said wireless signal is a radio signal, and said wireless connection between the first radio communication terminal and the second radio communication terminal is established using Bluetooth.

In one embodiment, said wireless signal is a broadcast signal.

In one embodiment, the step of establishing a connection between the first radio communication terminal and the media presentation device comprises the step of establishing a wireless communication connection.

In one embodiment, said wireless communication connection is established over radio using Bluetooth.

In one embodiment, the media data includes audio data representing an audio piece, and the media presentation device includes a speaker, and wherein the step of presenting the media includes the step of playing said audio piece on said speaker.

In one embodiment, the media data includes image data representing an image, and the media presentation device includes a display, and wherein the step of presenting the media includes the step of showing said image on the display.

In one embodiment, the media data includes video data representing moving images, and the media presentation device includes a video display, and wherein the step of presenting the media includes the step of showing said moving images on the display.

In one embodiment, said media presentation device includes a car stereo player and a speaker.

In one embodiment, said media presentation device includes a television set.

In one embodiment, the first radio communication terminal is a mobile phone.

In one embodiment, the second radio communication terminal is a mobile phone.

In one embodiment, the second radio communication terminal is a digital camera comprising means for wireless transmission of signals including image data representing images captured by said camera.

According to a second aspect, the objects of the present invention are fulfilled by a system for sharing media, comprising:
- a media presentation device for presenting media represented by a media signal, having a media signal input;
- a first mobile radio communication terminal including a data output connectable to the media presentation device, a data processing system, wireless signal receiving means, and data extraction means for extracting media data included in a received wireless signal; and
- a second radio communication terminal including a memory carrying media data, and means for wirelessly transmitting a signal including media data;
- wherein the first radio communication terminal includes an application comprising data code, which is executable in the data processing system to automatically render media data, extracted from a received wireless signal, to create a media signal, and to push a created media signal to the media presentation device through said data output, for presentation of the media.

In one embodiment, the system comprises a cable, connecting the media data input of the media presentation device to the data output of the first radio communication terminal.

In one embodiment, the wireless signal receiving means includes a Bluetooth chip.

In one embodiment, the wireless signal receiving means comprises an antenna for picking up a broadcast signal.

In one embodiment, the media data includes audio data representing an audio piece, and the media presentation device includes a speaker devised to play said audio piece.

In one embodiment, the media data includes image data representing an image, and the media presentation device includes a display devised to present said image.

In one embodiment, the media data includes video data representing moving images, and the media presentation device includes a video display devised to present said moving images.

In one embodiment, said media presentation device includes a car stereo player and a speaker.

In one embodiment, said media presentation device includes a television set.

In one embodiment, the first radio communication terminal is a mobile phone.

In one embodiment, the second radio communication terminal is a mobile phone.

In one embodiment, the second radio communication terminal is a digital camera comprising means for wireless transmission of wireless signals including image data representing images captured by said camera.

### Brief description of the drawings

The features and advantages of the present invention will be more apparent from the following description of the preferred embodiments with reference to the accompanying drawings, on which
Fig. 1 schematically illustrates a system for sharing media using a car stereo set, and a radio terminal attached by a cable to the car stereo, according to an embodiment of the invention;
Fig. 2 schematically illustrates a variant of the embodiment of Fig. 1, with the terminal having a wireless communicative connection to the car stereo;
Fig. 3 schematically illustrates a system for sharing media using a television set a radio terminal attached by a cable to thereto, according to an embodiment of the invention; and
Fig. 4 schematically illustrates a method for sharing media according to an embodiment of the invention.

### Detailed description of preferred embodiments

The present description relates inter alia to the field of radio communication terminals. The term radio communication terminal includes all mobile equipment devised for radio communication with a radio station, which radio station also may be mobile terminal or e.g. a stationary base station. Consequently, the term radio communication terminal includes mobile telephones, pagers, communicators, electronic organisers, smartphones, PDA:s (Personal Digital Assistants), laptop computers, and DECT terminals (Digital Enhanced Cordless Telephony), or any other type of electronic device having a memory for storing data and means for radio transmission of such data, such as a portable music player or a digital camera with radio transmission means. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

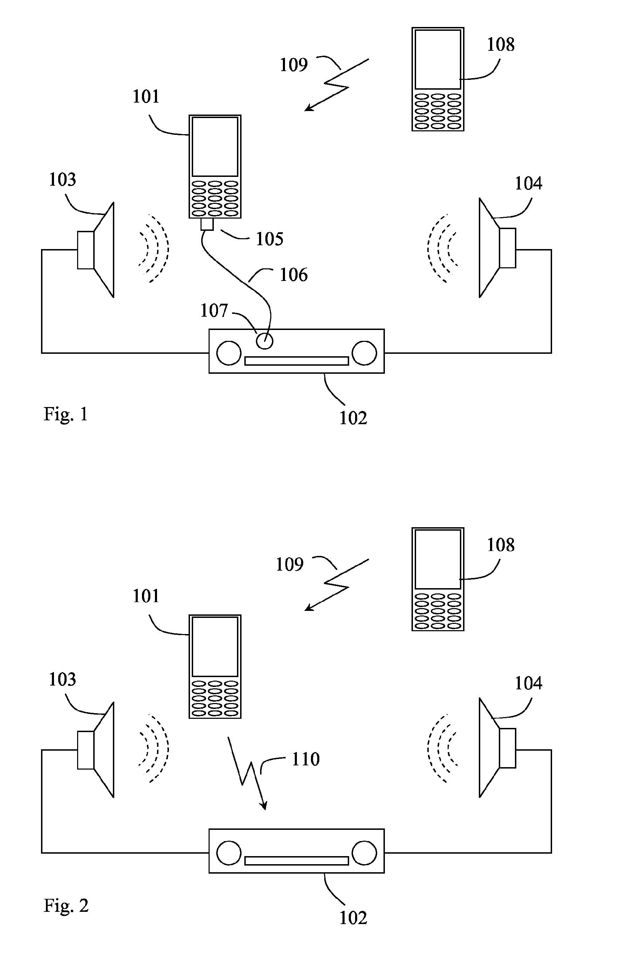

Fig. 1 illustrates a first embodiment of the invention, providing means for sharing music in a car, or other type of vehicle. It is well known that people in varying groups like to share their personal interest in media, in particular music, with others within a group of friends, family, or other. With the introduction of the mp3 format and other protocols for compressing and storing audio data digitally, the use of audio players devised to store and play music represented as software code has increased rapidly. Mobile radio communication terminals of today, such as mobile phones, pocket computers, laptops, and so on, often include a media player and a media memory for storing media files of audio and video. The media may be presented or played using an output interface of the terminal, such as a terminal display for presenting still images or video, or a terminal speaker for playing audio. Another way of presenting audio is to use an attached portable handsfree, e.g. a headset.

However, a mobile radio communication terminal is generally not appropriate for sharing audio media, typically music, with other users, since the built in speakers are fairly small. A vehicle, such as a car, is generally equipped with a built in stereo set. Herein, the term car stereo will be used to denote such a stereo set, regardless of which type of vehicle is intended, may it be a car, a truck, an agriculture machine, a boat, plane, or other type of vehicle. As presented above, there are today a number of ways to share media data stored in radio communication terminals. However, they all suffer from different drawbacks, most significantly regarding how to change from presenting a media item stored in one terminal, to presenting a media item stored in another terminal.

According to the first embodiment, an improved system for sharing media, in particular audio media, in a vehicle is provided. The system makes use of a mobile first radio communication terminal 101, herein also simply denoted first terminal, which is communicatively connected to a media presentation device 102, in the form of a car stereo of the vehicle. Connection between the first terminal 101 and the car stereo 102 is obtained by attaching a cable 106 between a data output port 105 in terminal 101, and a data input port 107 on car stereo 102. Data output port 105 and data input port 107 may be devised for communication of analog signals or digital signals. First terminal 101 is preferably devised with a data memory for storing media data, e.g. audio data, and means for rendering the media data, i.e. playing the media represented by the media data. Typically, first terminal 101 is equipped with a music player arranged to play music through a speaker, such as an mp3 player. When attached to car stereo 102 as illustrated, rendered media data is provided in a media signal through cable 106 to the car stereo 102. In car stereo 102, the media signal is passed to speakers 103, 104, through which the music represented by the media data is played to those situated in the vehicle.

If there is a desire to share media stored in a second radio communication terminal 108, herein also simply denoted second terminal 108, media data representing such media is included or encoded in a wireless signal 109, transmitted from second terminal 108 to first terminal 101. In first terminal 101, a software application comprising data code is stored, which is executable in a data processing system of first terminal 101, typically a micro processor system with associated operating software. When the wireless signal is received in the first terminal 101, the software application triggers the data processing system to automatically extract and render the media data received, create a media signal representing the rendered media, and push the created media signal to car stereo 102 through the established connection 105, 106, 107, for presentation of the media through speakers 103, 104. This way, media, typically music, residing as media data in different terminals, may be shared without changing physical connection between the source of the media, i.e. the terminals 101 and 108, and the media presentation device, i.e. car stereo 102. Such a system is therefore a more convenient solution for sharing media between users. Furthermore, using a media presentation device 102 which is external to the first terminal 101 and adapted for presentation of media in a way that first terminal 101 is not, in this embodiment having better or larger speakers 103, 104, the experience in sharing media through such an external media presentation device is higher than simply presenting the media from the terminal in which it is stored. Another advantage is that the media presentation device 102 need not as such be adapted for reception of radio signals. Furthermore, the second terminal 108, or any other terminal acting as a media supplier destined for media presentation device 102, need only know or be able to obtain a communication address to connected first terminal 101. In a group of user, that communication address is generally known beforehand, and for the case of Bluetooth connection is automatically set up by the communicating terminals 101 and 108. In one embodiment, the software application residing in first terminal 101 makes it possible to selectively turn on or off a media sharing mode for the first terminal 101, wherein the first terminal is set to automatically push or direct incoming media objects from other radio communication terminals to a selected media presentation device only when the media sharing mode is turned on. This embodiment is applicable to any type of media objects, such as audio, images or video.

In one embodiment, the software application residing in first terminal 101 comprises data code devised to trigger the data processing system to detect whether a connection is established between first terminal 101 and media presentation device 102, prior to triggering automatic pushing of the media signal, and to trigger pushing only if the connection detection indicates that such a connection is established.

In one embodiment, a radio connection is established between first radio communication terminal 101 and second radio communication terminal 108 prior to transmission of the wireless signal from second radio communication terminal 108. This may e.g. be the case in an embodiment using Bluetooth for transmission of a radio signal as the wireless signal. In another embodiment, however, the connection between first terminal 101 and second terminal 108 may be established over a telecommunications network, such as a 2^{nd} or 3^{rd} generation mobile system, in which communication is performed over base stations. The radio signal may for such embodiments e.g. be transmitted point to point or point to multipoint.

In an alternative to a solution with contact established prior to transmission of the radio signal, the radio signal may be broadcast from the second terminal 108. The first terminal 101 must in such case be devised to pick up such a broadcast signal, e.g. by means of including an antenna.

It should also be noted that wireless transmission of a signal including media data from the second terminal 108 to the first terminal 101, does not necessarily be performed using radio. As an alternative, an encoded infrared signal may instead be used, as is as such common knowledge for transmission of data between mobile terminals.

The terminals included in the system and used in the method of the first embodiment, are illustrated as mobile phones, which represents a preferred embodiment. However, the invention is equally applicable to any electronic device as the first terminal, provided is comprises means for receiving a wireless signal, means for automatically rendering received media data, and transmitting a media signal created from the rendered media data, through a communication connection to a media presentation device. Furthermore, the second terminal must comprise means for storing media data or conveying received media data, and means for wirelessly transmitting a signal including the media data. As an example, terminal 101 or 108 may e.g. be a portable media player, such as an mp3 player, comprising radio or IR transmission means for transmitting and receiving media data.

Fig. 2 illustrates schematically a second embodiment, similar in most aspects to the embodiment of Fig. 1. For the sake of simplicity, the same references are used for corresponding features. The example of Fig. 2 therefore also shows a media presentation device in the form of a car stereo, even though it is to be noted that other types of media presentation devices may be employed, such as picture display means. What differs between the embodiments of Figs 1 and 2 is that the media signal connection 110 between first terminal 101 and media presentation device 102 is wireless in the latter embodiment. For that purpose, first terminal 101 is devised with means for wireless transmission of media signals, such as by radio or IR, and the media presentation device 102 is likewise devised with means for receiving wirelessly transmitted media signals. Transmission of media from a second terminal 108 to media presentation device 102 is still effected through first terminal 101, which as such acts as a port for media transmitted to the external media presentation device 102. In a specific embodiment, transmission from second terminal 108 to first terminal 101 is performed using a first wireless transmission medium, and transmission from first terminal 101 to media presentation device 102 is performed using a second wireless transmission medium. As such, this embodiment may make it possible to share media residing in second terminal 108, even if direct communication between terminal 108 and device 102 is not possible due to lack of means for direct communication. For instance, terminal 108 may only be capable of communicating over a mobile telephony network, whereas media presentation device 102 is devised with a Bluetooth chip but lacks receiver means usable in that mobile telephony network. By means of using intermediate connection of first terminal 101, which has both means for receiving a radio signal from the mobile telephony network, and means for transmitting a media signal using Bluetooth, media from second terminal 108 may be transmitted to and presented through media presentation device 102.

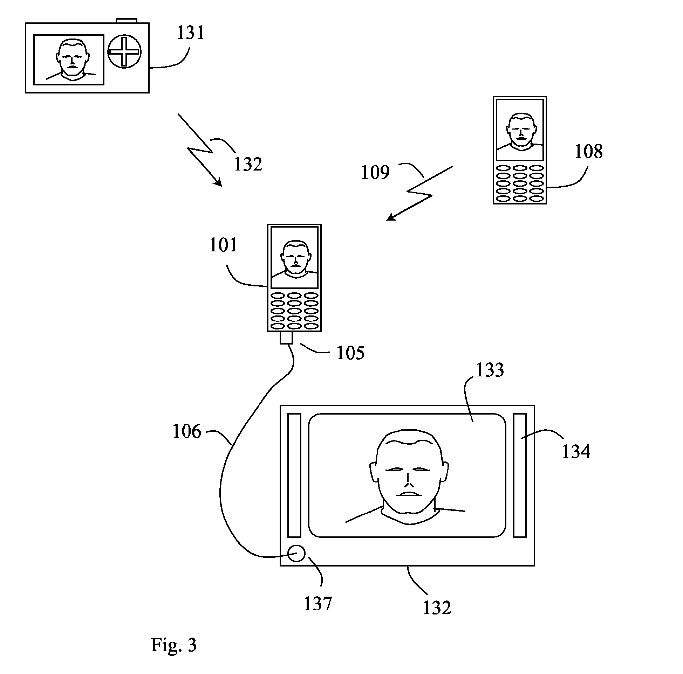

Fig. 3 illustrates a third embodiment of the invention, in which the same references are used for features corresponding to Fig. 1. In this case, however, a media presentation device 132 is included in the form of a display 133, devised for presentation of still or moving images, i.e. video. Media presentation device 132 may e.g. be a television set, as illustrated. Alternatively, media presentation device 132 is a portable video player, such as a DVD player, or a computer. The means and procedure for communicating media residing in a second terminal 108 to media presentation device 132 corresponds to what has been outlined with reference to Figs 1 or 2 above. The underlying objective with the solution according to Fig. 3, is that even though terminals having means for rendering image data are devised with their own displays, those displays are generally fairly small due to the general desire of having a compact terminals. In order to share media residing in different terminals in a more attractive way, media presentation device 132 is used, in which a larger and potentially sharper display 133 is comprised, and potentially also larger and better speakers 134 than in the terminals 101, 108. As indicated in Fig. 3, transmission of a media signal representing an image, which may be still or a video clip and may comprise audio, to media presentation device 132 is preferably performed over a cable 106, attached between a data output 105 in first terminal 101 and a data input 137 on media presentation device 132. Alternatively, such transmission may be performed wirelessly as indicated in Fig. 2.

Fig. 3 also illustrates a specific possible feature of a terminal 131 being a digital camera, as such comprising optical means for capturing an image, still or video, and data storage means for storing image data representing the captured image. Camera 131 is further devised with means for wireless transmission of a signal including image data. Such means for wireless transmission may, as previously described for terminals 101 and 108, include a Bluetooth chip, an IR transmitter, or an antenna for communicating over a mobile telephony network. In an alternative embodiment, first terminal 101 is or includes a digital camera or a digital video recorder, with means for wireless transmission of image data.

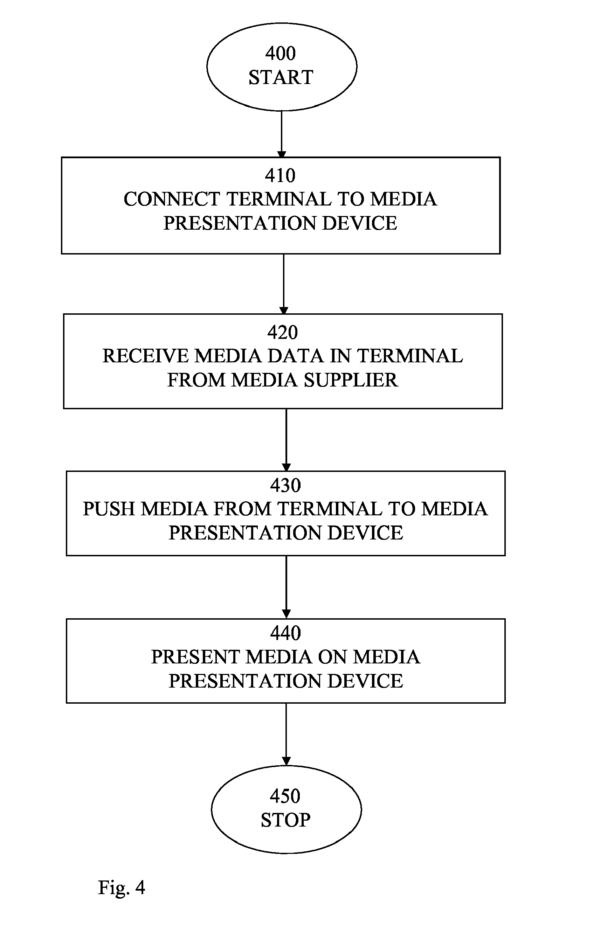

Fig. 4 schematically illustrates an embodiment of a method according to the invention. The method starts at 400, and proceeds as follows:
- In step 410, a first terminal is connected to a media presentation device. Connection is preferably made by cable, but may optionally be made wirelessly using e.g. radio or IR signal transmission.
- In step 420, a signal including media data is wirelessly received in the first terminal from a media supplier. The media supplier may e.g. be a radio communication terminal transmitting the media data encoded in a radio signal, or a digital camera transmitting image media data by means of IR or radio. However, as earlier indicated, any kind of device capable of transmitting a wireless signal including media data could provide the function of the media supplier. When received, the wireless signal is automatically decoded in the first terminal, if necessary, and the media data is extracted and rendered to create a media signal. In the case of audio data, the media signal is typically a speaker control signal devised to be sent to a speaker for creation of sound. In the case of image data, the media signal is typically a display control signal devised to be sent to a display for presentation of still or moving images.
- In step 430, the media signal is pushed from the first terminal to the connected media presentation device. Preferably, the media signal is automatically pushed to the media presentation device. In such an embodiment, any new media data received in the first terminal replaces the previous media data, and pushing the new data to the media presentation device therefore may be set to halt presentation of the presently presented media, and to instead start presenting the new media. In a variant of that embodiment, the first terminal may be set to queue the new media after the presently presented media, such that e.g. a music piece is allowed to end, after which presentation of the new media starts. In an alternative embodiment, confirmation may have to be provided to the first terminal, e.g. by means of a terminal user pressing a key on the first terminal to trigger transmission of the media signal. This may be the case in an embodiment where the first terminal is devised not only as a communication channel for other terminals to the media presentation device, but also as a master controller.
- In step 440, the media signal received in the media presentation device is automatically presented using e.g. speakers or a display.
- The method according to this embodiment ends at 450, but may also continue from 420, at which new media data is received in the first terminal from the second terminal, or from another media supplier.

The foregoing has described overall features, effects and advantages of the invention, as well as more specific solutions for various embodiments.

In one embodiment, the invention is realised using mobile phones and a vehicle stereo, herein denoted car stereo. By means of that embodiment, anyone present in the vehicle can share his or her music with the others by simply navigating on his own phone and pushing music to the phone connected to the car stereo, without any user action on the connected phone. With the invention the phone residing in a car holder connected to a car handsfree with stereo output, or directly to a car stereo, can not only play the music stored in its own phone memory but also play music that it receives from other phones as pushed files or streamed audio. In this way personal music or latest hits easily can be shared with friends when commuting in a car. This embodiment of the invention will increase the value of a cheap auxiliary cable or of a full car handsfree. Sharing music content stored in each phone becomes very easy and simple. The mobile phone connected to the car stereo will provide the means to play music sent from other phones in the car. The solution provides a very simple MMI, or rather no MMI, since all music sent to the phone while connected to the car stereo or residing in the car holder will be automatically played in the car stereo speakers. This way, little or no user interaction is needed on the phone connected to the car stereo. The solution also means that there is no need to exchange the phone connected to the car stereo to one of the passengers phones in order to listen to the music from that phone. Opportunities to share music with others will increase the interest of downloading music from operator sites and other music sites on the internet.

The embodiment described in conjunction with Fig. 3, typically implements an application in a phone or other device that is connected to a TV. The application will, when the phone or device receives image data via e.g. Bluetooth, automatically push the image to the TV via a cable connection. The phone would become aware of that a TV-cable is connected in the same way as it today becomes aware of accessories, such as Portable Handsfrees or Communicam, being connected. A low cost accessory cable will with this embodiment of the invention provide higher value to its users. Sharing content stored in each phone becomes very easy and simple. A cheaper cable will together with a phone perform in the same way as the more expensive Bluetooth-equipped product, such as an adapter for plugging into a media presentation device, would do. A cable has low cost, and the phone in combination with the TV cable in fact becomes a portable media viewer. The phone already has most of the capabilities for the solution. The implementation in the phone is simple since most phones of today already have the capability of receiving images from other phones. The user interface becomes extremely simple: Little or no user actions are needed in the phone that is connected to the TV-cable. It will automatically display any still or video images received. User actions needed on the sending phone, i.e. the media supplier communicating with the phone connected to the TV, are the same as used for ordinary transmission of images to a fellow user's phone. The invention can of course also be used for other applications, such as: a phone or other device connected to an overhead projector to allow for laptops or other devices to share the overhead projector and to push e.g. visual presentations that automatically and without user actions needed are displayed on the overhead display.

It should be noted that the various embodiments described with reference to the method illustrated in Fig. 4 may be executed in the systems as presented in conjunction with Figs 1-3. The presented embodiments are not to be interpreted as limitations to the invention, the scope of which is defined by the appended claims.

## Claims

1. Method for sharing media, comprising the steps of:
- establishing a connection (106) between a mobile first radio communication terminal (101) and a media presentation device (102);
- receiving a wireless signal (109), including media data, in the first radio communication terminal from a second radio communication terminal (108);
- rendering the media data in the first radio communication terminal to obtain a media signal;
- automatically pushing the media signal from the first radio communication terminal to the media presentation device; and
- presenting the media represented by the media signal by means of said media presentation device (103,104).

2. The method according to claim 1, wherein the step of pushing the media signal comprises the steps of:
- detecting whether a connection is established between the first radio communication terminal and the media presentation device; and
- automatically pushing the media signal only if detection indicates that such a connection is established.

3. The method according to any of the preceding claims, wherein the step of establishing a connection comprises the step of:
- connecting a cable (106) between a data output (105) of the first radio communication terminal and a data input (107) of the media presentation device.

4. The method according to any of the preceding claims, wherein the step of receiving a wireless signal comprises the step of:
- extracting the received media data from the wireless signal.

5. The method according to any of the preceding claims, comprising the step of:
- establishing a wireless connection between the first radio communication terminal and the second radio communication terminal, prior to the step of transmitting the wireless signal from the second radio communication terminal.

6. The method according to claim 5, wherein said wireless signal is a radio signal (109), and said wireless connection between the first radio communication terminal and the second radio communication terminal is established using Bluetooth.

7. The method according to any of the preceding claims 1-4, wherein said wireless signal (109) is a broadcast signal.

8. The method according to claim 1 or 2, wherein the step of establishing a connection between the first radio communication terminal and the media presentation device comprises the step of establishing a wireless communication connection (110).

9. The method according to claim 8, wherein said wireless communication connection is established over radio using Bluetooth.

10. The method according to any of the preceding claims, wherein the media data includes audio data representing an audio piece, and the media presentation device includes a speaker (103, 104), and wherein the step of presenting the media includes the step of playing said audio piece on said speaker.

11. The method according to any of the preceding claims, wherein the media data includes image data representing an image, and the media presentation device includes a display (133), and wherein the step of presenting the media includes the step of showing said image on the display.

12. The method according to any according of the preceding claims, wherein the media data includes video data representing moving images, and the media presentation device includes a video display (133), and wherein the step of presenting the media includes the step of showing said moving images on the display.

13. The method according to any according of the preceding claims 1-10, wherein said media presentation device includes a car stereo player (102) and a speaker (103, 104).

14. The method according to any according of the preceding claims 1-12, wherein said media presentation device includes a television set (132).

15. The method according to any according of the preceding claims, wherein the first radio communication terminal is a mobile phone (101).

16. The method according to any according of the preceding claims, wherein the second radio communication terminal is a mobile phone (108).

17. The method according to any according of the preceding claims 1-15, wherein the second radio communication terminal is a digital camera (131) comprising means for wireless transmission of signals including image data representing images captured by said camera.

18. System for sharing media, comprising:
- a media presentation device (102) for presenting media represented by a media signal, having a media signal input (107);
- a mobile first radio communication terminal (101) including a data output (105) connectable to the media presentation device, a data processing system, wireless signal receiving means, and data extraction means for extracting media data included in a received wireless signal; and
- a second radio communication terminal (108) including a memory carrying media data, and means for wirelessly transmitting a signal (109) including media data;
- wherein the first radio communication terminal includes an application comprising data code, which is executable in the data processing system to automatically render media data, extracted from a received wireless signal, to create a media signal, and to push a created media signal to the media presentation device through said data output, for presentation of the media.

19. The system according to claim 18, comprising a cable (106), connecting the media data input of the media presentation device to the data output of the first radio communication terminal.

20. The system according to claim 18, wherein the wireless signal receiving means includes a Bluetooth chip.

21. The system according to claim 18, wherein the wireless signal receiving means comprises an antenna for picking up a broadcast signal.

22. The system according to any of the preceding claims 18-21, wherein the media data includes audio data representing an audio piece, and the media presentation device includes a speaker (103, 104) devised to play said audio piece.

23. The system according to any of the preceding claims 18-22, wherein the media data includes image data representing an image, and the media presentation device includes a display (133) devised to present said image.

24. The system according to any of the preceding claims 18-23, wherein the media data includes video data representing moving images, and the media presentation device includes a video display (133) devised to present said moving images.

25. The system according to any of the preceding claims 18-22, wherein said media presentation device includes a car stereo player (102) and a speaker (103, 104).

26. The system according to any of the preceding claims 18-24, wherein said media presentation device includes a television set (132).

27. The system according to any of the preceding claims 18-26, wherein the first radio communication terminal is a mobile phone (101).

28. The system according to any of the preceding claims 18-27, wherein the second radio communication terminal is a mobile phone (108).

29. The system according to any of the preceding claims 18-27, wherein the second radio communication terminal is a digital camera (131) comprising means for wireless transmission of wireless signals including image data representing images captured by said camera.
